# EUROPÄISCHE PATENTANMELDUNG

(11) **EP 4 016 052 A1**
(43) Veröffentlichungstag der Anmeldung: **22.06.2022**
(21) Anmeldenummer: 20215405.0
(22) Anmeldetag: 18.12.2020
(51) Int. Cl.: G01N 21/41, G01M 11/00, G01M 11/02, B29D 11/00, G01N 21/03

(54) **VERFAHREN UND VORRICHTUNG ZUR ERMITTLUNG DES BRECHZAHLPROFILS EINES ZYLINDERFÖRMIGEN OPTISCHEN GEGENSTANDES**

(71) Anmelder: Heraeus Quarzglas GmbH & Co. KG, 63450 Hanau (DE)
(72) Erfinder: SCHMITT, Maximilian, 63450 Hanau (DE); OCHS, Stefan, 63450 Hanau (DE)
(74) Vertreter: Staudt, Armin Walter

(57) **Zusammenfassung**

Ein bekanntes Verfahren zur Ermittlung des Brechungsindexprofils eines optischen Gegenstandes (22), insbesondere eine optische Vorform (22) mit einem Kern (22a) und einem Mantelbereich (22b), umfasst die folgenden Verfahrensschritte: Bereitstellen einer Messzelle (1) mit einem Hohlraum (1a) mit kreisrundem Querschnitt zur Aufnahme des optischen Gegenstandes (22), Einbringen des optischen Gegenstandes (22) in den Hohlraum (1a), Erzeugen eines in die Messzelle (1) einfallenden Lichtstrahls (21), der im optischen Gegenstand (22) abgelenkt wird und als abgelenkter Lichtstrahl (24) die Messzelle (1) verlässt, Erfassen des abgelenkten Lichtstrahls (24) mittels eines optischen Licht-Sensors (7) zur Bestimmung eines Ablenkwinkels, Abscannen eines Querschnitts des optischen Gegenstandes (22) durch relative Verlagerung (10) des Lichtstrahls (21) entlang von dessen Zylindermantelfläche (26) und Wiederholung der Verfahrensschritte (c) und (d), wobei eine Vielzahl von Ablenkwinkeln ermittelt wird und Berechnen des Brechungsindexprofils des optischen Gegenstandes (22) basierend auf den Ablenkwinkeln. Um davon ausgehend das Brechzahlprofil eines zylinderförmigen optischen Gegenstandes (22) zuverlässiger und genauer ermitteln zu können, wird erfindungsgemäss vorgeschlagen, dass eine Messzelle (1) aus monokristallinem Calciumfluorid bereitgestellt wird.

## Beschreibung

Die Erfindung betrifft ein Verfahren zur Ermittlung des Brechungsindexprofils eines eine Zylindermantelfläche und eine Zylinderlängsachse aufweisenden optischen Gegenstandes, umfassend die folgenden Verfahrensschritte:
(a) Bereitstellen einer Messzelle mit einem Hohlraum mit kreisrundem Querschnitt zur Aufnahme des optischen Gegenstandes,
(b) Einbringen des optischen Gegenstandes und einer Immersionsflüssigkeit in den Hohlraum,
(c) Erzeugen mindestens eines durch eine Eintrittsfläche in die Messzelle einfallenden Lichtstrahls, der auf die Zylindermantelfläche des optischen Gegenstandes auftrifft, im optischen Gegenstand abgelenkt wird, aus der Zylindermantelfläche des optischen Gegenstandes austritt, und als abgelenkter Lichtstrahl die Messzelle durch eine Austrittsfläche verlässt,
(d) Erfassen des abgelenkten Lichtstrahls mittels eines optischen Licht-Sensors zur Bestimmung eines Ablenkwinkels,
(e) Abscannen eines Querschnitts des optischen Gegenstandes durch relative Verlagerung des Lichtstrahls entlang von dessen Zylindermantelfläche und Wiederholung der Verfahrensschritte (c) und (d), wobei eine Vielzahl von Ablenkwinkeln ermittelt wird,
(f) Berechnen des Brechungsindexprofils des optischen Gegenstandes basierend auf den Ablenkwinkeln.

Außerdem betrifft die Erfindung eine Vorrichtung zur Ermittlung des Brechungsindexprofils eines eine Zylindermantelfläche und eine Zylinderlängsachse aufweisenden optischen Gegenstandes, aufweisend:
(i) eine Messzelle mit einem mit Immersionsflüssigkeit befüllbaren Hohlraum mit kreisrundem Querschnitt zur Aufnahme des optischen Gegenstandes, die eine Lichtstrahl-Eintrittsfläche und eine Lichtstrahl-Austrittsfläche aufweist,
(ii) eine Lichtquelle zur Emission eines Lichtstrahls auf den im Hohlraum aufgenommenen optischen Gegenstandes,
(iii) einen optischen Licht-Sensor zur Erfassung eines im optischen Gegenstand abgelenkten Lichtstrahls,
(iv) einen Prozessor zur Ermittlung eines Ablenkwinkels,
(v) und eine Verlagerungseinrichtung zur Verlagerung des Lichtstrahls relativ zur Zylindermantelfläche des optischen Gegenstandes.

Derartige zylinderförmige optische Gegenstände sind beispielsweise Faser-Vorformen, optische Fasern, Lichtleiter oder Zylinderlinsen. Diese haben in der Regel einen kreisrunden Querschnitt. Andere optische Gegenstande haben einen nicht-kreisrunden Querschnitt, der beispielsweise oval, polygonal, insbesondere quadratisch, rechteckig, 6-eckig, 8-eckig, trapezförmig, sternförmig oder D-förmig ist. Eine der wichtigen Eigenschaften derartiger Gegenstände ist ihre Brechzahl (der Brechungsindex) und dessen räumliche Verteilung, insbesondere die radiale Brechzahlverteilung, die hier auch als "Brechzahlprofil" bezeichnet wird. So bestimmt beispielsweise das Brechzahlprofil der Faser-Vorform die Wellenleitereigenschaften der daraus gezogenen optischen Faser. Die hier maßgeblichen optischen Gegenstände haben ein homogenes oder ein stufenförmiges Brechzahlprofil oder einen Brechungsindex-Gradienten.

Zur Ermittlung des Brechzahlprofils werden sogenannte Preform-Analyzer eingesetzt. Dabei wird ein fokussierter optischer Strahl (hier auch als "Lichtstrahl" bezeichnet) quer zur Zylinderlängsachse des zu messenden optischen Gegenstandes rasterweise durch einen Querschnitt des Gegenstandes geführt und aus der Strahlrichtung des aus dem Gegenstand austretenden, gebrochenen Lichtstrahls bezogen auf die Strahlrichtung am Auftreffort der sogenannte "Ablenkwinkel" bestimmt. Das rasterweise Durchleuchten des Querschnitts wird hier als "Abscannen" bezeichnet. Die Schar, der beim Abscannen des Lichtstrahls senkrecht zur Zylinderlängsachse gemessenen unterschiedlichen Ablenkwinkel wird auch als "Ablenkwinkelverteilung" bezeichnet. Aus den transversalen Messdaten der Schar der Ablenkwinkel (der Ablenkwinkelverteilung) kann das Brechzahlprofil im durchleuchteten Volumenbereich rekonstruiert werden.

### Stand der Technik

Aus der US 2016/123873 A1 sind ein Verfahren zur Messung eines Brechzahlprofils eines zylinderförmigen Glaskörpers und eine dafür eingesetzte Vorrichtung bekannt. Die zylinderförmige Oberfläche des Glaskörpers wird unter Verwendung eines kollimierten optischen Strahls, der von einem beleuchteten Spalt ausgeht, an mehreren Abtastorten abgescannt und der beleuchtete Spalt jeweils auf einer Abbildungsebene hinter dem Glaskörper fokussiert. Mittels eines Licht-Sensors wird das Abbild des beleuchteten Spalts erfasst und es werden diejenigen Austrittsorte identifiziert, an denen die optischen Strahlen nullter Ordnung auftreffen, nachdem sie ausgehend von den Abtastorten den verdichteten Glaskörper passiert haben. Aus den Datenpaaren der Abtast- und Austrittsorte ermittelt eine Auswerteeinheit die Ablenkwinkel der Strahlen nullter Ordnung und eine Ablenkwinkelverteilung. Mittels numerischer Integration wird aus der Ablenkwinkelverteilung das Brechzahlprofil des Glaskörpers rekonstruiert.

Die zu analysierende Vorform ist dabei in einer Messzelle montiert, die einen Hohlraum mit kreisrundem Querschnitt aufweist, wobei der Ringspalt zwischen der Hohlraum-Innenwandung und der Vorform mit Immersionsöl gefüllt und abgedichtet ist. Die Messzelle ist beispielsweise in Form eines plattenförmigen Quaders aus Quarzglas - also aus amorphem SiO₂ - ausgebildet, wobei der Hohlraum eine kreisförmige Innenbohrung in dem Quarzglas-Quader ist. Die Innenbohrung hat einen Durchmesser, der nur wenig größer ist als der Durchmesser der darin aufzunehmenden Vorform, so dass der Ringspalt nur wenige Millimeter beträgt und im idealen Fall eine einheitliche Breite hat. Die planparallelen Quader-Außenseiten bilden eine Eintrittsfläche für den in die Messzelle einfallenden Lichtstrahl beziehungsweise - gegenüberliegend davon - eine Austrittsfläche für den aus der Messzelle austretenden, abgelenkten Lichtstrahl. Eintrittsfläche und Austrittsfläche sind optisch poliert.

### Technische Aufgabenstellung

Das Quarzglas der Messzelle hat einen bekannten Brechungsindex. Dieser liegt bei Quarzglas, das aus natürlichem vorkommendem, kristallinem Quarz erschmolzen ist beispielsweise bei 1,4572, und bei synthetisch erzeugtem Quarzglas bei 1,4571 (jeweils bei einer Messwellenlänge von 589 nm). Der bekannte Brechungsindex der Messzelle dient als Referenz für die Ermittlung des Brechungsindexprofils des optischen Gegenstandes.

Das Brechungsindexprofil des zylinderförmigen optischen Gegenstandes ergibt sich durch eine Änderung der Materialeigenschaften in radialer Richtung, beispielsweise durch eine Änderung der Konzentration an einem Dotierstoff oder der Konzentrationen mehrere Dotierstoffe in Quarzglas. Das bekannte Messverfahren ist für die Ermittlung des Brechungsindex-Profils eines zylinderförmigen optischen Gegenstandes geeignet, dessen Zylindermantelfläche aus undotiertem Quarzglas besteht oder aus dotiertem Quarzglas, dessen Brechungsindex sich von dem von undotiertem Quarzglas aber nicht sehr unterscheidet.

Häufig besteht die Zylindermantelfläche des optischen Gegenstandes jedoch aus dotiertem Quarzglas, dessen Brechungsindex sich von dem von undotiertem Quarzglas deutlich unterscheidet. Beispielsweise werden im Mantelbereich optischer Vorformen durch Dotierung mit Fluor Brechzahlabsenkungen gegenüber undotiertem Quarzglas erreicht, die in der Größenordnung bis zu -30x10⁻³ liegen können. Durch zusätzliche Dotierung mit Bor kann die Brechzahl noch weiter abgesenkt werden. Dieser Brechzahlunterschied führt zu vergleichsweise großen Ablenkwinkeln, deren Ermittlung fehlerbehaftet ist und für die das bekannte Messverfahren nicht uneingeschränkt geeignet ist.

Der Erfindung liegt daher die Aufgabe zugrunde, das bekannte Messverfahren dahingehend zu modifizieren, dass das Brechzahlprofil eines zylinderförmigen optischen Gegenstandes mit einer Oberfläche, deren Brechungsindex niedriger ist als der von undotiertem Quarzglas, zuverlässiger und genauer ermittelt werden kann.

Außerdem liegt der Erfindung die Aufgabe zugrunde, eine zur Durchführung des Verfahrens besonders angepasste Vorrichtung bereitzustellen.

### Zusammenfassung der Erfindung

Hinsichtlich des Verfahrens wird diese Aufgabe ausgehend von einem Verfahren der eingangs genannten Gattung erfindungsgemäß dadurch gelöst, dass, eine Messzelle aus monokristallinem Calciumfluorid bereitgestellt wird.

Der zu analysierende optische Gegenstand besteht beispielsweise aus mit Fluor und/oder mit Bor dotiertem Quarzglas oder er hat eine Oberflächenschicht aus einem mit Fluor und/oder mit Bor dotierten Quarzglas (im Folgenden auch kurz bezeichnet als "fluordotiertes Quarzglas" oder als bor-dotiertes Quarzglas). Fluor und Bor bewirken eine Absenkung des Brechungsindex von Quarzglas. Mit diesen Substanzen dotiertes Quarzglas wird häufig als Mantelmaterial optischer Vorformen eingesetzt, beispielsweise optischer Vorformen mit einem Kern aus undotiertem Quarzglas.

Bei der Durchführung der Messung tritt der Lichtstrahl durch eine Eintrittsfläche der Messzelle in diese ein und trifft an einer Strahl-Eintrittsstelle auf eine Oberfläche aus dem fluordotierten Quarzglas des optischen Gegenstandes und wird dabei je nach Betrag der Brechungsindexdifferenz abgelenkt. Der Lichtstrahl tritt an einer Strahl-Austrittsstelle aus dem optischen Gegenstand aus und erfährt dabei eine weitere Ablenkung, bevor er die Messzelle durch eine Austrittsfläche der Messzelle verlässt.

Im Unterschied zum bekannten Verfahren wird zur Messung des Brechungsindexprofils eine Messzelle eingesetzt, die aus monokristallinem Calciumdifluorid (Calciumfluorid; CaF₂) besteht.

Monokristallines Calciumfluorid ist aufgrund seiner kristallinen Struktur in hochreiner und definierter Form zu vergleichsweise geringen Kosten im Handel erhältlich. Es hat einen definierten Brechungsindex und die Dispersionskurve des Brechungsindexes ist bekannt. Unter Labor-Standardbedingungen (20°C; 1013mbar) hat Calciumfluorid einen Brechungsindex von 1,43288. Somit kennt man die Brechzahl der Messzelle, die als Referenz für die Ermittlung der Brechungsindex des zu messenden optischen Gegenstandes dient, sehr genau. Dieser Brechungsindex ist niedriger als der von nicht dotiertem Quarzglas (etwa 1.457). Der Unterschiedsbetrag zum Brechungsindex des fluordotierten Quarzglases ist im Vergleich zu einer traditionellen Messzelle aus undotiertem Quarzglas gering. So hat beispielsweise Quarzglas, das mit 5 Gew.-% Fluor dotiert ist, unter Labor-Standardbedingungen einen Brechungsindex von 1,440. Die Brechungsindex-Differenz zu undotiertem, synthetischem Quarzglas beträgt etwa - 17x10⁻³, wohingegen die Brechungsindex-Differenz zu Calciumfluorid nur etwa +7x10⁻³ beträgt (alle obigen Angaben zum Brechungsindex gelten für die Messwellenlänge von 633nm). Durch Dotierung kann der Brechungsindex von Calciumfluorid verändert werden; Dotierstoffe sind beispielsweise Magnesium oder Barium.

Durch die vergleichsweise geringe Brechzahldifferenz zwischen dem Material der Messzelle und der Oberfläche des zu messenden optischen Gegenstandes ergeben sich mehrere Vorteile:
- Kleine Brechzahlstufen führen zu kleinen Ablenkwinkeln, die die Grundlage der Messtechnik bilden. Kleine Ablenkwinkel sind einfacher zu messen als große Ablenkwinkel. Bei stark abgelenkten Lichtstrahlen kann es vorkommen, dass sie vom Licht-Sensor nicht mehr erfasst werden.
- Bei der mathematischen Verarbeitung der Ablenkwinkelverteilung wird häufig eine mathematische Approximation benutzt, bei der angenommen wird, dass der Ablenkwinkel hinreichend klein sei, um seinen Sinus oder Tangens durch den Ablenkwinkel selbst ersetzen zu können. Die erfindungsgemäß tatsächlich kleineren Ablenkwinkel führen dabei zu einem kleineren Approximationsfehler.
- Kleine Ablenkwinkel vermindern außerdem Messfehler in optischen Erfassungs- und Messgeräten, die beispielsweise in Kamerasystemen infolge von Nichtlinearitätseffekten und Linsenabberation in den Randbereichen auftreten.

Die Messzelle besteht in der Regel aus einem monolithischen Körper, wie etwa einem Block oder einer Platte, wobei der Hohlraum zur Aufnahme des optischen Gegenstandes als Bohrung ausgeführt sein kann, an der sich eine Eintrittsfläche für den Lichtstrahl und eine Austrittsfläche an Körper-Planseiten diametral gegenüberliegen.

Das erfindungsgemäße Verfahren ist besonders vorteilhaft einsetzbar, wenn das mit Fluor und/oder mit Bor dotierte Quarzglas einen Brechungsindex im Bereich von 1,420 bis 1,444, bevorzugt von 1,426 bis 1,444 hat.

Die Brechungsindexdifferenz zwischen dem vergleichsweise niedrig dotierten Quarzglas mit einem Brechungsindex von 1,444 und dem Calciumfluorid der Messzelle liegt hier bei 11x10⁻³ und ist damit immer betragsmäßig noch geringer als die Brechungsindexdifferenz zu undotiertem Quarzglas (13x10⁻³). Die Fluor-Konzentration in dem Quarzglas beträgt dabei etwa 3 bis 4 Gew.-%.

Beim hoch mit Fluor dotierten Quarzglas mit einem Brechungsindex von 1,420 liegt die Fluor-Konzentration in dem Quarzglas bei etwa 7 bis 9 Gew.-%..Grundsätzlich ist die Messzelle aus Calciumfluorid auch zur Messung von Quarzglas mit noch niedrigerem Brechungsindex besser geeignet als die Standard-Messzelle aus Quarzglas.

Vorzugsweise wird eine Immersionsflüssigkeit eingesetzt, die einen Brechungsindex aufweist, der sich um mindestens um 1x10⁻³ vom Brechungsindex des optischen Gegenstandes unterscheidet.

Die Brechungsindizes von Immersionsflüssigkeit und optischem Gegenstand sind in diesem Fall verschieden. Dadurch wird gewährleistet, dass im Brechungsindex-Profil die Außen-Oberfläche des optischen Gegenstandes als Brechzahlsprung erkennbar ist. Davon abgesehen liegt der Brechungsindex der Immersionsflüssigkeit vorteilhafterweise etwa in der Mitte zwischen den Brechungsindizes von optischem Gegenstand und Messzelle.

Durch diese Mittelwert-Einstellung des Brechungsindex der Immersionsflüssigkeit werden anstelle einer großen Brechung und einer kleinen Brechung, zwei mittelmäßige Brechungen und damit gemäß dem Snellius'schen Brechungsgesetz ein möglichst kleiner Austrittswinkel erreicht. Immersionsflüssigkeiten mit einer breiten Spanne an Brechungsindizes sind im Handel erhältlich oder können durch Mischen hergestellt werden.

Besonders bevorzugt wird eine Immersionsflüssigkeit eingesetzt, die Glycerin enthält.

Glycerin (Glycerol; C₃H₅(OH)₃) hat einen Brechungsindex von 1,474 (n_{D}²⁰; gemessen bei der Wellenlänge von 589 nm und bei Standard-Laborbedingungen). Bei einer Temperatur von 20°C hat Glycerin eine Viskosität um 1480 mPa·s, die hoch ist im Vergleich zu üblichen Immersionsölen (typischerweise 100 - 120 mPa·s). Die vergleichsweise hohe Viskosität erleichtert die Abdichtung des Hohlraums der Messzelle. Da Glycerin wasserlöslich ist, lässt sich über das Mischungsverhältnis mit Wasser (Brechungsindex: etwa 1.33) die Brechzahl der Mischung einfach einstellen. Für fluordotiertes Quarzglas liegt das Mischungsverhältnis typischerweise im Bereich von etwa 70 bis 90 Gew.-% Glycerin, Rest: Wasser.

Calciumfluorid ist in Wasser zwar schwerlöslich, unterliegt aber bei anhaltendem Kontakt mit H₂O einer allmählichen Degradation. Um der Verschlechterung der optischen Eigenschaften von Eintritts- beziehungsweise Austrittsfläche entgegen zu wirken, wird vorzugsweise eine wasserfreie Immersionsflüssigkeit eingesetzt.

Auch die polierten, freien Oberflächen von Eintrittsfläche und Austrittsfläche aus CaF₂ sind in gewissem Umfang anfällig für Degradation, wenn sie permanent der Atmosphäre ausgesetzt sind. Um dem entgegenzuwirken ist bei einer bevorzugten Verfahrensweise vorgesehen, dass die freie Oberfläche von Eintrittsfläche
und/oder Austrittsfläche zum Schutz vor Feuchtigkeit mit einer Schutzschicht aus einem Kunststoff oder aus einer anorganischen Substanz beschichtet ist.

Die Schutzschicht aus Kunststoff besteht beispielsweise aus einem für die Messstrahlung transparenten, hydrophoben Lack wie beispielsweise aus einem Fluorpolymer, und die Schutzschicht aus der anorganischen Substanz besteht beispielsweise aus SiO₂, Al₂O₃, MgF₂ oder BaF₂ in amorpher, glasiger Form.

Alternativ oder ergänzend dazu wird die Eintrittsfläche und/oder Austrittsfläche mit einer für die Messstrahlung transparenten Schutzscheibe belegt. Die Schutzscheibe besteht beispielsweise aus Kunststoff oder aus Quarzglas, insbesondere aus undotiertem oder einem mit Fluor und/oder mit Bor dotierten Quarzglas. Sie ist vorzugsweise abnehmbar und kann bei Bedarf entfernt oder ausgewechselt werden.

In den Spalt zwischen der Eintrittsfläche beziehungsweise der Austrittsfläche wird vorteilhafterweise eine Immersionsflüssigkeit eingebracht. Diese ist im Hinblick auf eine möglichst geringe Korrosion der Calciumfluorid-Messzelle vorzugsweise wasserfrei.

Hinsichtlich der Vorrichtung wird die technische Aufgabe ausgehend von einer Vorrichtung der eingangs genannten Gattung erfindungsgemäß dadurch gelöst, die Messzelle aus monokristallinem Calciumfluorid besteht.

Die Vorrichtung ist insbesondere ausgelegt zur Messung des Brechungsindex-Profils eines optischen Gegenstandes, der aus mit Fluor und/oder mit Bor dotiertem Quarzglas oder der eine Oberflächenschicht aus einem mit Fluor und/oder mit Bor dotierten Quarzglas hat. Fluor und Bor bewirken eine Absenkung des Brechungsindex von Quarzglas. Mit diesen Substanzen dotiertes Quarzglas wird häufig als Mantelmaterial optische Vorformen eingesetzt, beispielsweise von Vorformen mit einem Kern aus undotiertem Quarzglas.

Bei der Durchführung der Messung tritt der Lichtstrahl durch eine Eintrittsfläche in die Messzelle ein und trifft an der Strahl-Eintrittsstelle auf eine Oberfläche aus dem fluordotierten Quarzglas und wird dabei je nach Betrag der Brechungsindexdifferenz abgelenkt. Der Lichtstrahl tritt an der Strahl-Austrittsstelle aus dem optischen Gegenstand aus und erfährt dabei eine weitere Ablenkung, bevor er die Messzelle durch eine Austrittsfläche verlässt.

Die Messzelle besteht aus monokristallinem Calciumdifluorid (Calciumfluorid; CaF₂). Monokristallines Calciumfluorid ist aufgrund seiner kristallinen Struktur in hochreiner und definierter Form zu vergleichsweise geringen Kosten im Handel erhältlich. Der Brechungsindex und die Dispersionskurve des Brechungsindexes sind genau bekannt. Unter Labor-Standardbedingungen (20°C; 1013mbar) hat es einen Brechungsindex von 1,43288 bei der Messwellenlänge von 633nm. Somit kennt man die Brechzahl der Messzelle, die als Referenz für die Ermittlung der Brechungsindex des zu messenden optischen Gegenstandes dient, sehr genau. Dieser Brechungsindex ist niedriger als der von nicht dotiertem Quarzglas (etwa 1.457). Der Unterschiedsbetrag zum Brechungsindex des fluordotierten Quarzglases ist im Vergleich zu einer traditionellen Messzelle aus undotiertem Quarzglas gering

So hat beispielsweise Quarzglas, das mit 5 Gew.-% Fluor dotiert ist, unter Labor-Standardbedingungen einen Brechungsindex von 1,440 bei der Messwellenlänge von 633nm. Die Brechungsindex-Differenz zu undotiertem, synthetischem Quarzglas beträgt etwa -17x10⁻³, wohingegen die Brechungsindex-Differenz zu Calciumfluorid nur etwa +7x10⁻³ beträgt. (alle Angaben zum Brechungsindex gelten für die Messwellenlänge von 633nm). Durch Dotierung kann der Brechungsindex von Calciumfluorid verändert werden.

Durch die vergleichsweise geringe Brechzahldifferenz zwischen dem Material der Messzelle und der Oberfläche des zu messenden optischen Gegenstandes ergeben sich mehrere Vorteile:
- Kleine Brechzahlstufen führen zu kleinen Ablenkwinkeln, die die Grundlage der Messtechnik bilden. Kleine Ablenkwinkel sind einfacher zu messen als große Ablenkwinkel. Bei stark abgelenkten Lichtstrahlen kann es vorkommen, dass sie vom Licht-Sensor nicht mehr erfasst werden.
- Bei der mathematischen Verarbeitung der Ablenkwinkelverteilung wird häufig eine mathematische Approximation benutzt, bei der angenommen wird, dass der Ablenkwinkel hinreichend klein sei, um seinen Sinus oder Tangens durch den Ablenkwinkel selbst ersetzen zu können. Die erfindungsgemäß tatsächlich kleineren Ablenkwinkel führen dabei zu einem kleineren Approximationsfehler.
- Kleine Ablenkwinkel vermindern außerdem Messfehler in optischen Messgeräten, wie beispielsweise in Kamerasystemen, die infolge von Nichtlinearitätseffekten und Linsenabberation in den Randbereichen auftreten.

Die Messzelle besteht in der Regel aus einem monolithischen Körper, wie etwa einem Block oder einer Platte, wobei der Hohlraum zur Aufnahme des optischen Gegenstandes als Bohrung ausgeführt sein kann, an der sich eine Eintrittsfläche für den Lichtstrahl und eine Austrittsfläche an Körper-Planseiten diametral gegenüberliegen.

Bei Standard-Messzellen aus Quarzglas können sich große Ablenkwinkel ergeben, so dass der Messtrahl beim Austritt aus der Messzelle auf Hindernisse, wie etwa Halterungen, Schrauben oder dergleichen trifft. Diese Störungen treten wegen des besser angepassten Brechungsindexes bei der Calciumfluorid-Messzelle nicht auf, so dass diese insbesondere Vorteile bei großen Durchmessers des zu messenden optischen Gegenstandes, beispielsweise bei Außendurchmessern von 75 mm oder mehr, und bei Vorformen mit hoher numerischer Apertur hat.

Die erfindungsgemäße Vorrichtung ist insbesondere zur Messung des Brechungsindex-Profils eines optischen Gegenstandes ausgelegt, wenn das mit Fluor und/oder mit Bor dotierte Quarzglas einen Brechungsindex im Bereich von 1,420 bis 1,444, bevorzugt von 1,426 bis 1,444, hat.

Die Brechungsindexdifferenz zwischen dem vergleichsweise niedrig dotierten Quarzglas mit einem Brechungsindex von 1,444 und dem Calciumfluorid der Messzelle liegt hier bei 11x10⁻³ und ist damit immer betragsmäßig noch geringer als die Brechungsindexdifferenz zu undotiertem Quarzglas (13x10⁻³). Die Fluor-Konzentration in dem Quarzglas beträgt dabei etwa 3 bis 4 Gew.-% .

Beim einem hoch mit Fluor dotierten Quarzglas mit einem Brechungsindex von 1,420 liegt die Fluor-Konzentration bei etwa 7 bis 9 Gew.-%.

Calciumfluorid ist in Wasser zwar schwerlöslich, unterliegt aber bei anhaltendem Kontakt mit H₂O einer allmählichen Degradation. Daher sind die polierten, freien Oberflächen von Eintrittsfläche und Austrittsfläche aus CaF₂ in gewissem Umfang anfällig für Degradation, wenn sie permanent der Atmosphäre ausgesetzt sind. Um dem entgegenzuwirken ist bei einer bevorzugten Ausführungsform vorgesehen, dass die Eintrittsfläche und/oder Austrittsfläche zum Schutz vor Feuchtigkeit mit einer Schutzschicht aus einem Kunststoff oder aus einer anorganischen Substanz beschichtet ist.

Die Schutzschicht aus Kunststoff besteht beispielsweise aus einem für die Messstrahlung transparenten, hydrophoben Lack wie beispielsweise aus einem Fluorpolymer, und die Schutzschicht aus der anorganischen Substanz besteht beispielsweise aus SiO₂, Al₂O₃, MgF₂ oder BaF₂ in amorpher oder glasiger Struktur.

Alternativ oder ergänzend dazu ist die Eintrittsfläche und/oder Austrittsfläche mit einer für die Messstrahlung transparenten Schutzscheibe belegt. Die Schutzscheibe besteht beispielsweise aus Kunststoff oder aus Quarzglas, insbesondere aus undotiertem oder einem mit Fluor und/oder mit Bor dotierten Quarzglas. Sie ist vorzugsweise abnehmbar und kann bei Bedarf entfernt oder ausgewechselt werden. Zwischen der Eintrittsfläche beziehungsweise der Austrittsfläche befindet sich vorteilhafterweise eine Immersionsflüssigkeit. Diese ist im Hinblick auf eine möglichst geringe Korrosion der Calciumfluorid-Messzelle vorzugsweise wasserfrei.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

### Ablenkwinkelverteilung

Der Ablenkwinkel Ψ ist definiert als Winkel zwischen dem aus dem zu messenden Gegenstand austretenden Austrittsstrahl und dem in den Gegenstand eintretenden Eintrittsstrahl. Die Schar der beim Scannen des Lichtstrahls senkrecht zur ZylinderLängsachse (in y-Richtung) gemessenen Ablenkwinkel ergibt die "Ablenkwinkelverteilung".

### Abscannen eines Querschnitts des optischen Gegenstandes

Beim Abscannen wird der auf die Zylinder-Oberfläche auftreffende Lichtstrahl - wie etwa ein Laserstrahl - in gerader Linie entlang des Querschnitts verlagert.

### Licht-Intensitätsverteilung / Licht-Intensitätsprofil

Als "Licht-Intensitätsverteilung" wird diejenige Lichtverteilung bezeichnet, die der Licht-Sensor beim Abscannen des zu vermessenden optischen Gegenstandes in y-Richtung erfasst. Diese kann infolge Beugungseffekten und Entstehung von gebeugten Strahlen höherer Ordnung eine Auffächerung in x-Richtung aufweisen. Als "Licht-Intensitätsprofil" wird diejenige Lichtverteilung bezeichnet, die der Lichtsensor in x-Richtung (quer zur Auffächerung) erfasst.

### Messzelle

Die Messzelle aus Calciumfluorid liegt im Strahlgang des Messtrahls (Lichtstrahl). Sie ist in der Regel eingefasst von einer Halterung aus einem anderen Werkstoff und sie kann von weiteren Bauelementen umgeben sein.

### Brechungsindex

Die Angaben zum Brechungsindex beziehen sich auf Labor-Standardbedingungen (20°C; 1013mbar) und gelten - sofern im jeweiligen Kontext nicht ausdrücklich etwas anderes gesagt wird - für die Messwellenlänge von 633nm.

### Quarzglas

Unter Quarzglas wird hier ein Glas verstanden, das einen SiO₂-Gehalt von mindestens 90 Gew.-% hat.

### Ausführungsbeispiel

Nachfolgend wird die Erfindung anhand eines Ausführungsbeispiels und einer Zeichnung näher erläutert. In der Zeichnung zeigt im Einzelnen
- **Figur 1:**: eine schematische Darstellung einer Ausführungsform einer Vorrichtung zur Ermittlung eines Brechungsindex-Profils,
- **Figur 2**: eine Messzelle in dreidimensionaler Darstellung,
- **Figur 3:**: eine Skizze zur Erläuterung der Durchführung der Messung,
- **Figur 4:**: eine Ablenkwinkelverteilung, gemessen an einer optischen Vorform mit Kern und Mantel unter Einsatz einer Vorrichtung und eines Verfahrens gemäß der Erfindung,
- **Figur 5:**: einen Ausschnitt der Ablenkwinkelverteilung von Figur 4 in vergrößerter Darstellung,
- **Figur 6:**: ein Diagramm mit einer auf Basis der Ablenkwinkelverteilung von Figur 4 ermittelten Brechzahlverteilung,
- **Figur 7:**: eine Ablenkwinkelverteilung, gemessen an einer optischen Vorform mit Kern und Mantel unter Einsatz einer Vorrichtung und eines Verfahrens nach dem Stand der Technik,
- **Figur 8:**: einen Ausschnitt der Ablenkwinkelverteilung von Figur 7 in vergrößerter Darstellung, und
- **Figur 9:**: ein Diagramm mit einer auf Basis der Ablenkwinkelverteilung von Figur 7 ermittelten Brechzahlverteilung.

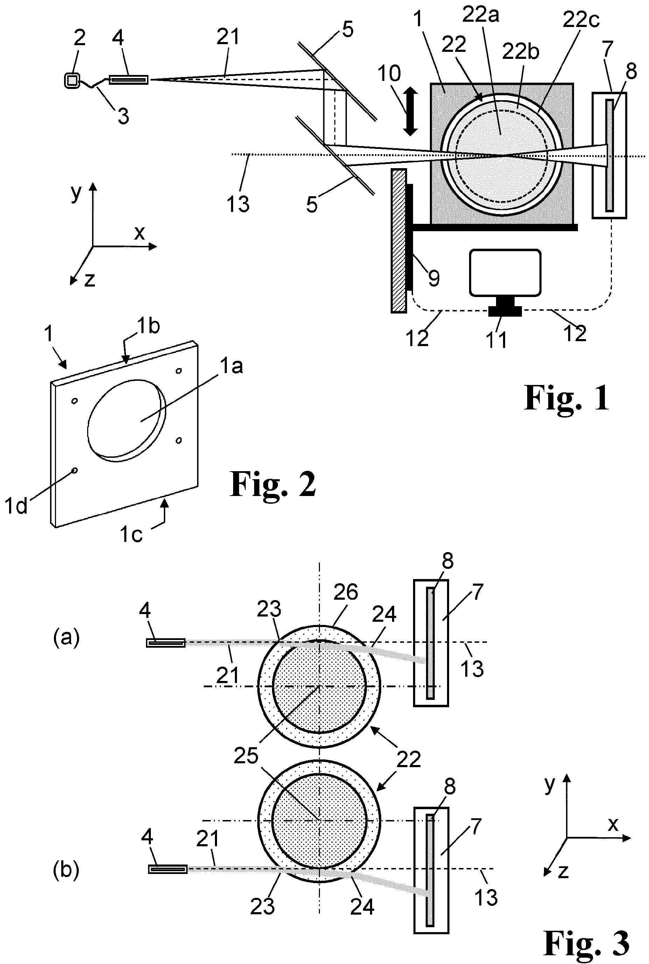

Das Verfahren und die Vorrichtung dienen zur Ermittlung eines Brechzahlprofils eines zylinderförmigen optischen Gegenstandes, im Ausführungsbeispiel einer optischen Vorform 22 (Figur 3) zum Ziehen von Lichtleitfasern, die einen Kern 22a aus undotiertem Quarzglas und einen den Kern 22a umhüllenden Mantelbereich 22b aus einem mit Fluor dotierten Quarzglas aufweist.

Ein Querschnitt der Vorform 22 wird in einer Messzelle 1 aufgenommen und rasterweise mit einem Lichtstrahl 24 durchleuchtet (abgescannt) und aus dem jeweiligen Auftreffort des Lichtstrahls 24 auf der Zylindermantelfläche der Vorform 22 und dem Auftreffort des Lichtstrahls 24 auf einem optischen Sensor 7 wird der Ablenkwinkel berechnet. Die Schar der Ablenkwinkel der Lichtstrahlen eines Scans bilden die Ablenkwinkelverteilung, aus der das Brechzahlprofil der Vorform 22 rekonstruiert wird.

**Figur 1** zeigt schematisch den optischen Aufbau der Messvorrichtung. Es handelt sich dabei um einen konstruktiv veränderten Preform-Analyzer
P-106 der Firma Photon Kinetics Ltd.. Die Vorrichtung verfügt über eine quaderförmige Messzelle 1 mit einer runden Bohrung zur Aufnahme des zu vermessenden Querschnitts der Vorform 22 und einer die Vorform 22 umgebenden Immersionsflüssigkeit. Die Größen von Quader und Bohrung richten sich nach dem Durchmesser der zu messenden Vorform.

**Figur 2** zeigt eine räumliche Ansicht einer derartigen Messzelle 1. Sie besteht aus einem plattenförmigen Quader aus monokristallinem, Calciumfluorid. Der Quader hat eine Kantenlänge von 117 mm und eine Dicke von 10 mm. Er hat eine kreisrunde Bohrung 1a mit einem Durchmesser von 84 mm zur Aufnahme der zu messenden Vorform. Der Calciumfluorid-Kristall der Messzelle 1 ist für die Messtrahlung transparent und hat einen Brechungsindex von 1,43288 (gemessen bei der Wellenlänge von 633 nm und bei Standard-Laborbedingungen). Der von der Laserdiode 2 emittierte Lichtstrahl trifft auf die Quader-Stirnseite, die als Eintrittsfläche 1b in die Messzelle 1 dient und er verlässt die Messzelle 1 über die gegenüberliegende Stirnseite, die als Austrittsfläche 1c dient. Die Wandung der Bohrung 1a, das Eintrittsfläche 1b und das Austrittsfläche 1c sind optisch poliert. Die Löcher 1d dienen zur Fixierung der Messzelle 1 an zwei Beistellplatten (nicht dargestellt), in die Dichtringe zur Abdichtung des Aufnahmeraums (Bohrung 1a) für die Immersionsflüssigkeit eingelassen sind.

Der zwischen der Innenwandung der Messzellen-Bohrung 1a und der Vorform 22 verbleibende Ringspalt 22c ist mit einer Immersionsflüssigkeit gefüllt. Dabei handelt es sich um ein Immersionsöl mit einem Brechungsindex von 1,4350.

Bei einer anderen Ausführungsform wird als Immersionsflüssigkeit eingesetzt, die aus 90 Gewichtsanteilen Glycerin (C₃H₅(OH)₃) und 10 Gewichtsanteilen Wasser besteht..

Als Lichtquelle dient eine Laserdiode 2 mit einer Emissionswellenlänge von 635 nm, die über eine optische Faser 3 mit einem Strahleneingangsbauteil 4 verbunden ist, das eine Baueinheit mit einer Strahlkonditionierungsoptik 5 bildet. Die Strahlkonditionierungsoptik dient der Fokussierung des Messstrahls auf einen Fokuspunkt und besteht im Wesentlichen aus zwei sogenannten Off-Axis-Parabolspiegeln 5. Sie ist so konfiguriert, dass sich der Strahlfokus des Lichtstrahls in der y-z-Ebene und in der

Zylinderlängsachse der Messzelle 1 befindet. Der aus der Vorform austretende Lichtstrahl trifft auf eine Zeilenkamera 7 mit einem Zeilensensor 8. Die Erstreckungsrichtung des Zeilensensors 8 ist die y-Richtung, wie vom kartesischen Koordinatenkreuz angezeigt. Das Zentrum der Zeilenkamera 7 befindet sich idealerweise auf der optischen Achse 13. Dadurch wird erreicht, dass auch die größtmöglichen Ablenkwinkel in der Ablenkwinkelverteilungen noch vollständig aufgelöst werden können.

Die Zeilenkamera 7 ist eine CMOS-Zeilenkamera mit Monochrom-Sensor, die unter der Bezeichnung UNIIQA+ 16K CL MONOCHROME von der Firma Teledyne e2V im Handel ist. Sie verfügt über eine Sensorlänge von 82 mm und eine horizontale Auflösung von 16384 Pixeln bei einer Pixelgröße von 5 µm und eine Farbtiefe (Helligkeitsauflösung) von 12 Bit. Die Zeilenkamera hat im Wellenlängenbereich von 400 nm bis etwa 1100 nm eine ausreichende spektrale Empfindlichkeit. Der in y-Richtung abgelenkte Messstrahl wird von der Zeilenkamera 7 detektiert.

Die Position der Messzelle 1 ist in Bezug auf die optische Achse 13 veränderbar. Dazu ist die Messzelle 1 auf einem Verschiebetisch 9 montiert und mittels diesem in der anhand des Richtungspfeils 10 angezeigten Richtung (y-Richtung) senkrecht zur optischen Achse 13 verschiebbar. Der Verschiebetisch 9 und die Zeilenkamera 7 sind über Datenleitungen 12 mit einem Rechner 11 verbunden.

**Figur 3** zeigt schematisch den Strahlengang des Lichtstrahls 21 bei in die Messzelle 1 (Figur 1, Figur 2) eingesetzter Vorform 22 bei einer oberen Scanposition (a) und einer unteren Scanposition (b). Der in das Strahleneingangsbauteil 4 eintretende Lichtstrahl 21 trifft auf die zylinderförmige Oberfläche 26 und wird am Eintrittsort 23 in die Vorform 22 in Richtung auf die Vorform-Mittelachse 25 gebrochen. Beim Austritt am Austrittsort 24 wird der Lichtstrahl 21 erneut gebrochen und gelangt auf den Zeilensensor 8 der Zeilenkamera 7. Durch Verschieben der Vorform 22 senkrecht zur optischen Achse 13 in y-Richtung wird der Querschnitt der Vorform 22 vollständig durchleuchtet und abgescannt, so dass auf der Sensorzeile 8 der Zeilenkamera 7 als Funktion der Scanposition unterschiedliche Lichtintensitätsprofile erfasst werden, die sich jeweils aus dem abgelenkten, nicht gebeugten Strahl nullter Ordnung und aus abgelenkten und gebeugten Strahlen höherer Ordnung zusammensetzen. Das Licht-Intensitätsprofil wird ausgewertet mit dem Ziel, aus dem Abstand von Eintrittsort 23 und Austrittsort 24 in y-Richtung gesehen für den jeweiligen Scan die Verteilung der Ablenkwinkel psi(y) für den Strahl nullter Ordnung zu ermitteln.

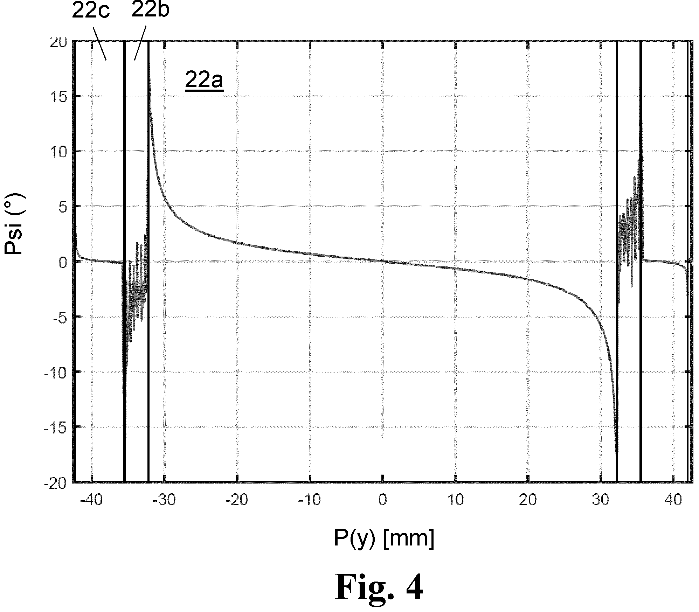

Die Brechzahl-Differenz zwischen der Messzelle 1 und dem äußeren Mantel 22c der Vorform 22 beträgt -0,00712 (-7,12x10⁻³). Das ist - im Vergleich zu einer Standard-Messzelle aus undotiertem Quarzglas - eine kleine Differenz, die zu entsprechend kleinen Ablenkwinkeln beim Übergang von der Messzelle 1 auf die Vorform 22 führt und damit einhergehend das Messergebnis weniger negativ beeinflusst als dies bei größeren Ablenkwinkeln der Fall wäre. Die **Figuren 4 bis 6** zeigen Ergebnisse einer Brechungsindexprofil-Messung an der optischen Vorform unter Einsatz des konstruktiv veränderten Preform-Analyzers P-106 mit einer Messzelle aus Calciumfluorid. Das Diagramm von **Figur 4** zeigt eine über den Querschnitt der Vorform gemessene Ablenkwinkelverteilung. Der Ablenkwinkel Psi (in Grad) ist aufgetragen gegen den Ortsvektor P(y) (in mm). Das Profil ist weitgehend umgekehrt spiegelsymmetrisch um die Mittellinie (Position 0). Die radialen Vorformbereiche Kern 22a, Mantel 22b und der mit Immersionsflüssigkeit gefüllte Ringspalt 22c deutlich voneinander abgegrenzt.

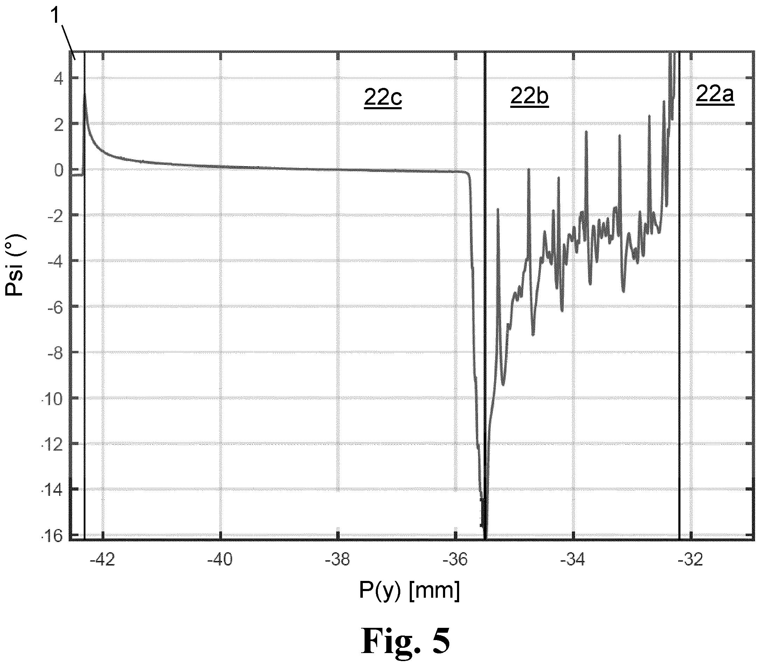

**Figur 5** zeigt die linke Seite der Ablenkwinkelverteilung in höherer Auflösung. Hier ist auch die Ablenkwinkelverteilung im Bereich der Messzelle 1 zu erkennen. Im Übergangsbereich zwischen Messzelle 1 und Ringspalt 22c (Immersionsflüssigkeit) zeigt sich eine einfache Auslenkung mit einer Amplitude, die etwa 4 Winkelgrade umfasst.

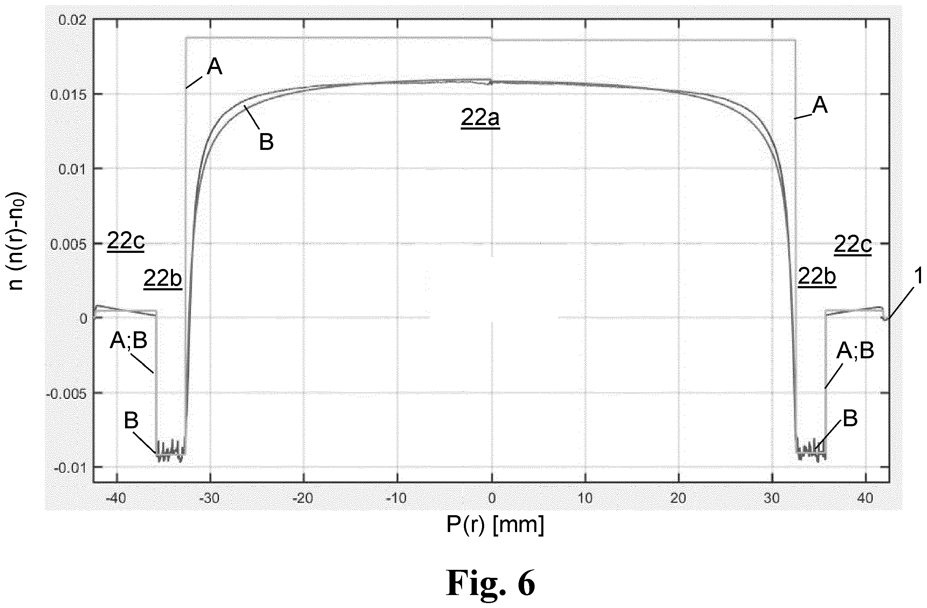

Auf Basis der Ablenkwinkelverteilung von Figur 4 wird anhand der bekannten inversen Abel- Transformation das radiale Brechzahlprofils der Vorform ermittelt. Im Diagramm von **Figur 6** ist die Brechzahl n (im Vergleich zu undotiertem Quarzglas, in relativen Einheiten) gegen die radiale Position P(r) (in mm) aufgetragen. Das Diagramm enthält drei Kurven. Die Kurve A zeigt das als real vorliegend angenommene Brechzahlprofil, und die Kurve B das anhand der Erfindung ermittelte Brechzahlprofil. Die weitere Kurve zeigt ein durch Modellierung ermitteltes Brechzahlprofil, das mit dem gemessenen Brechzahlprofil von Kurve B weitgehend übereinstimmt und das im Folgenden nicht näher betrachtet wird.

Die gemessene Vorform umfasst den Kernbereich 22a und den äußeren Mantelbereich 22b. Die Brechungsindex-Differenz laut Kurve A zwischen Kern und Mantelbereich beträgt etwa 0,028. Der Durchmesser der Vorform beträgt 74 mm. Das Brechzahlprofil der Vorform, wie es Kurve B wiedergibt, zeigt im Mantelbereich 22b Schwankungen, die sich aber gut durch eine gerade Linie annähern lassen, die den erwarteten Brechungsindex-Verlauf gut annähert. Die erwähnte Auslenkung in der Ablenkwinkelverteilung im Bereich Messzelle 1 und Ringspalt 22c wirkt sich auf das Brechungsindex-Profil nicht nennenswert aus.

### Vergleichsbeispiel

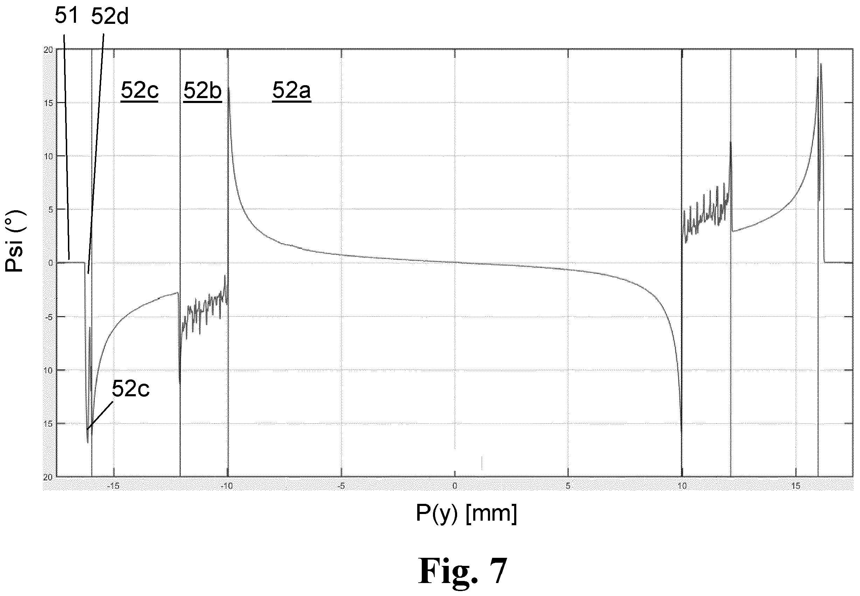

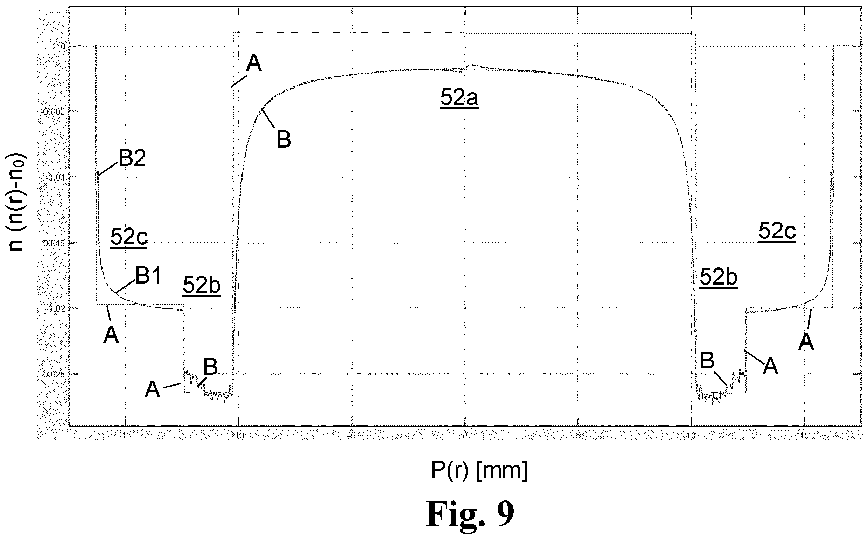

Die **Figuren 7 bis 9** zeigen Ergebnisse einer Brechungsindexprofil-Messung an einer anderen optischen Vorform, die einen Kern 52a aus undotiertem Quarzglas, einen den Kern 52a umhüllenden inneren Mantelbereich 52b aus einem mit Fluor dotierten Quarzglas sowie einen äußeren Mantelbereich 52c aus einem anderen mit Fluor dotierten Quarzglas aufweist. Die Fluor-Konzentration des inneren Mantelglases 52b ist höher als die des äußeren Mantelglases 52c. Das äußere Mantelglas 52c hat einen um etwa 0,022 niedrigen Brechungsindex als der Kern 52a (siehe Figur 9). Der Durchmesser der Vorform beträgt 32 mm.

Diese Vorform wurde mittels eines handelsüblichen Preform-Analyzers P-106 mit einer Standard-Messzelle aus undotiertem SiO₂ vermessen. Das Diagramm von **Figur 7** zeigt eine über den Querschnitt der Vorform gemessene Ablenkwinkelverteilung. Der Ablenkwinkel Psi (in Grad) ist aufgetragen gegen den Ortsvektor P(y) (in mm). Das Profil ist weitgehend umgekehrt spiegelsymmetrisch um die Mittellinie (Position 0). Die radialen Vorformbereiche Kern 52a, innerer Mantel 52b und äußerer Mantel 52c sind deutlich voneinander abgegrenzt. Im Bereich des mit Immersionsflüssigkeit gefüllten Ringspalts 52d zwischen dem äußeren Mantelbereich 52c und dem SiO₂ der Messzelle 51 zeigt die Messkurve deutliche mehrfache Auslenkungen.

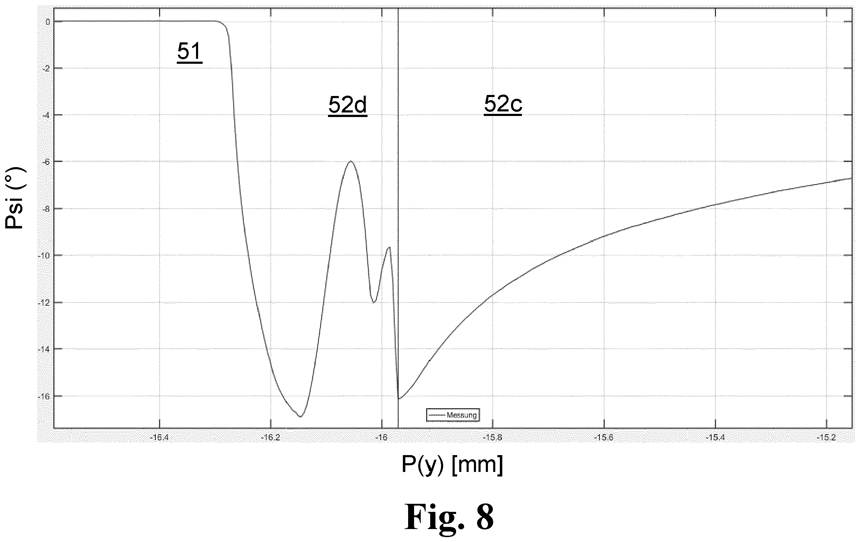

In **Figur 8** sind diese Auslenkungen im Übergangsbereich zwischen dem äußeren Mantel 52c und dem Ringspalt 52d (Immersionsflüssigkeit) stärker aufgelöst. Die größte Amplitude der mehrfachen Auslenkungen umfasst etwa 10 Winkelgrade.

Auf Basis der Ablenkwinkelverteilung von Figur 7 wird anhand der bekannten inversen Abel- Transformation das radiale Brechzahlprofils der Vorform ermittelt. Die Auslenkungen der Ablenkwinkelverteilung im Übergangsbereich zwischen Messzelle 51 und äußerem Mantel 52c führt dabei zu Fehlern im Brechungsindex-Profil. Dies zeigt das Diagramm von **Figur 9****,** in dem die Brechzahl n (im Vergleich zu undotiertem Quarzglas, in relativen Einheiten) gegen die radiale Position P(r) (in mm) aufgetragen ist. Die gemessene Vorform umfasst den Kernbereich 52a, den inneren Mantelbereich 52b und den äußeren Mantelbereich 52c, wobei sich die Mantelbereiche 52b und 52c in ihrem Brechungsindex unterscheiden. Das Diagramm enthält drei Kurven. Die Kurve A zeigt das als real vorliegend angenommene Brechzahlprofil, und die Kurve B das anhand der Messung mittels der Standard-Ausrüstung ermittelte Brechzahlprofil. Auch hier zeigt die weitere Kurve ein durch Modellierung ermitteltes Brechzahlprofil, das mit dem gemessenen Brechzahlprofil von Kurve B weitgehend übereinstimmt und die nicht näher betrachtet wird. Das Brechzahlprofil der Vorform, wie es Kurve B wiedergibt, zeigt insbesondere im Bereich des äußeren Mantelbereichs 52c eine ausgeprägte Abrundung B1 und eine Unstetigkeit B2, die auf die oben erläuterten Auslenkungen der Ablenkwinkelverteilung zurückgeführt werden können.

Bei einem anderen Ausführungsbeispiel ist auf jeder der optisch polierten Lichteintritts- und Lichtaustrittsflächen 1b und 1c der Messzelle 1 zum Schutz vor Degradation des Calciumfluorids ein 0,5 mm dickes Rechteck-Plättchen aus undotiertem Quarzglas aufgesetzt. Zwischen den Quarzglas-Plättchen und den planparallel dazu verlaufenden Lichteintritts- beziehungsweise Lichtaustrittsflächen 1b und 1c befindet sich eine Immersionsflüssigkeit.

## Patentansprüche

1. Verfahren zur Ermittlung des Brechungsindexprofils eines eine Zylindermantelfläche (26) und eine Zylinderlängsachse (25) aufweisenden optischen Gegenstandes (22), umfassend die folgenden Verfahrensschritte:
(a) Bereitstellen einer Messzelle (1) mit einem Hohlraum (1a) mit kreisrundem Querschnitt zur Aufnahme des optischen Gegenstandes (22),
(b) Einbringen des optischen Gegenstandes (22) und einer Immersionsflüssigkeit in den Hohlraum (1a),
(c) Erzeugen mindestens eines durch eine Eintrittsfläche (1b) in die Messzelle (1) einfallenden Lichtstrahls (21), der auf die Zylindermantelfläche (26) des optischen Gegenstandes (22) auftrifft, im optischen Gegenstand (22) abgelenkt wird, aus der Zylindermantelfläche (26) des optischen Gegenstandes (22) austritt, und als abgelenkter Lichtstrahl die Messzelle (1) durch eine Austrittsfläche (1c) verlässt,
(d) Erfassen des abgelenkten Lichtstrahls mittels eines optischen Licht-Sensors (7) zur Bestimmung eines Ablenkwinkels,
(e) Abscannen eines Querschnitts des optischen Gegenstandes (22) durch relative Verlagerung des Lichtstrahls (21) entlang von dessen Zylindermantelfläche (26) und Wiederholung der Verfahrensschritte (c) und (d), wobei eine Vielzahl von Ablenkwinkeln ermittelt wird,
(f) Berechnen des Brechungsindexprofils des optischen Gegenstandes (22) basierend auf den Ablenkwinkeln,
**dadurch gekennzeichnet, dass** eine Messzelle (1) aus monokristallinem Calciumfluorid (CaF₂) bereitgestellt wird.

2. Verfahren nach Anspruch 1, **dadurch gekennzeichnet, dass** der zylinderförmige optische Gegenstandes (22) aus einem mit Fluor und/oder mit Bor dotierten Quarzglas besteht oder eine Oberflächenschicht (22b) aus einem mit Fluor und/oder mit Bor dotierten Quarzglas aufweist.

3. Verfahren nach Anspruch 2, **dadurch gekennzeichnet, dass** das mit Fluor und/oder mit Bor dotierte Quarzglas einen Brechungsindex im Bereich von1,420 bis 1,444 aufweist.

4. Verfahren nach einem der vorhergehenden Ansprüche, **dadurch gekennzeichnet, dass** eine Immersionsflüssigkeit eingesetzt wird, die einen Brechungsindex aufweist, der sich um mindestens um 1x10⁻³ vom Brechungsindex des optischen Gegenstandes (22) unterscheidet.

5. Verfahren nach einem der vorhergehenden Ansprüche, **dadurch gekennzeichnet, dass** eine Immersionsflüssigkeit eingesetzt wird, die Glycerin enthält.

6. Verfahren nach einem der vorhergehenden Ansprüche, **dadurch gekennzeichnet, dass** die Eintrittsfläche (1b) und/oder die Austrittsfläche (1c) mit einer Schutzschicht aus einem Kunststoff oder aus einer anorganischen Substanz beschichtet ist.

7. Verfahren nach einem der vorhergehenden Ansprüche, **dadurch gekennzeichnet, dass** die Eintrittsfläche (1b) und/oder die Austrittsfläche (1c) mit einer transparenten Schutzscheibe belegt wird.

8. Vorrichtung zur Ermittlung des Brechungsindexprofils eines eine Zylindermantelfläche (26) und eine Zylinderlängsachse (25) aufweisenden optischen Gegenstandes (22), aufweisend
(i) eine Messzelle (1) mit einem mit Immersionsflüssigkeit befüllbaren Hohlraum (1a) mit kreisrundem Querschnitt zur Aufnahme des optischen Gegenstandes (22), die eine Lichtstrahl-Eintrittsfläche (1b) und eine Lichtstrahl-Austrittsfläche (1c) aufweist,
(ii) eine Lichtquelle (2) zur Emission eines Lichtstrahls (21) auf den im Hohlraum (1a) aufgenommenen optischen Gegenstandes (22),
(iii) einen optischen Licht-Sensor (7) zur Erfassung eines im optischen Gegenstand (22) abgelenkten Lichtstrahls (21),
(iv) einen Prozessor (11) zur Ermittlung eines Ablenkwinkels,
(v) und eine Verlagerungseinrichtung (9) zur Verlagerung des Lichtstrahls (21) relativ zur Zylindermantelfläche (26) des optischen Gegenstandes (22),
**dadurch gekennzeichnet, dass** die Messzelle (1) aus monokristallinem Calciumfluorid besteht.

9. Vorrichtung nach Anspruch 8, **dadurch gekennzeichnet, dass** die Eintrittsfläche (1b), die Austrittsfläche (1c) und die Hohlraumwandung poliert sind.

10. Vorrichtung nach Anspruch8 oder 9, **dadurch gekennzeichnet, dass** die Eintrittsfläche (1b) und/oder die Austrittsfläche (1c) mit einer Schutzschicht aus einem Kunststoff oder aus einer anorganischen Substanz beschichtet ist.

11. Vorrichtung nach einem der Ansprüche8 bis 10, **dadurch gekennzeichnet, dass** die Eintrittsfläche (1b) und/oder die Austrittsfläche (1c) mit einer transparenten Schutzscheibe belegt ist.

12. Vorrichtung nach Anspruch 11, **dadurch gekennzeichnet, dass** sich zwischen der Eintrittsfläche (1b) beziehungsweise der Austrittsfläche (1c) eine Immersionsflüssigkeit befindet, vorzugsweise eine wasserfrei Immersionsflüssigkeit.

13. Verwendung der Vorrichtung nach einem der vorhergehenden Ansprüche 8 bis 12 zur Ermittlung eines Brechungsindexprofils eines zylinderförmigen optischen Gegenstandes (22), der aus einem mit Fluor und/oder mit Bor dotierten Quarzglas besteht oder der eine Oberflächenschicht (22b) aus einem mit Fluor und/oder mit Bor dotierten Quarzglas aufweist.
